**Europäisches Patentamt**

**European Patent Office**

**Office européen des brevets**

(19)

(11) Veröffentlichungsnummer: **0 069 841**
**A2**

(12) # EUROPÄISCHE PATENTANMELDUNG

(21) Anmeldenummer: 82103995.5

(22) Anmeldetag: 07.05.82

(51) Int. Cl.³: **B 65 G 65/06**

(30) Priorität: 13.07.81 DE 3127603

(43) Veröffentlichungstag der Anmeldung:
19.01.83 Patentblatt 83/3

(84) Benannte Vertragsstaaten:
BE DE FR GB IT

(71) Anmelder: Krupp Polysius AG
Graf-Galen-Strasse 17
D-4720 Beckum(DE)

(72) Erfinder: Heinemann, Otto, Ing. (grad.)
Galileistrasse 8
D-4722 Ennigerloh(DE)

(74) Vertreter: Tetzner, Volkmar, Dr.-Ing. Dr. Jur.
Van-Gogh-Strasse 3
D-8000 München 71(DE)

(54) **Vorrichtung zum Räumen eines Mischbettes.**

(57) Die Erfindung betrifft eine Vorrichtung zum Räumen eines Schüttgut-Mischbettes (1) mit vorzugsweise dreieckiger oder trapezförmiger Anschnittfläche (7). Hierbei ist an einer verfahrbaren Brücke (2) ein Ausleger (3) angebracht, der einen zum Kratzeingriff mit der Mischbett-Anschnittfläche (7) bestimmten Rechen (8) trägt. Um eine verhältnismäßig leichte und doch sehr stabile Konstruktion bei zuverlässiger Räumarbeit zu erreichen, ist an dem Ausleger (3) im Bereich der Mitte der Anschnittfläche (7) eine durch einen Antrieb (10) drehbare Drehschiene (9) gelagert, von der der bis zu den Ecken der Anschnittfläche (7) reichende Rechen (8) in Längsrichtung (Pfeil 13) verschiebbar getragen wird.

FIG. 1

EP 0 069 841 A2

Vorrichtung zum Räumen eines Mischbettes

Die Erfindung betrifft eine Vorrichtung zum Räumen eines Mischbettes, mit einem an einer verfahrbaren Brücke angebrachten Ausleger, der einen zum Kratzeingriff mit der Anschnittfläche des Mischbettes bestimmten Rechen trägt.

Für die haldenförmige Lagerung von Schüttgütern sowie für deren Homogenisierung werden längs ausgerichtete oder runde Mischbetten verwendet.Das Räumen oder Rückladen eines solchen Mischbettes erfolgt dann mit der genannten Vorrichtung von einem Stirnende her in der Weise, daß der Rechen mit einer im allgemeinen dreieckigen oder trapezförmigen Anschnittfläche des Mischbettes in Kratzeingriff gebracht wird. Hierbei wird das im Bereich der Anschnittfläche des Mischbettes
wodurch/
befindliche Schüttgut aufgelockert /es zur Basis der Anschnittfläche herabrieselt, wo es von einem Aufnahmegerät (z.B. Kratzerkette, Förderwagen, Förderband oder dgl.) aufgenommen und abtransportiert wird.

In der Praxis kommen zahlreiche Ausführungsformen von Räumvorrichtungen mit verschieden ausgebildeten Rechen zum Einsatz. So ist es beispielsweise aus DE-OS 25 04 975 bekannt, bei einer Räumvorrichtung einen Rechen zu verwenden, dessen eines Ende im Bereich des Mischbettfirstes von einem Ausleger schwenkbar gehaltert wird, während das andere Rechenende im Bereich der Basis der Mischbett-Anschnittfläche mit einem Wagen längs dieser Basis hin- und herverfahrbar ist, so daß die Anschnittfläche des Mischbettes scheibenwischerartig bestrichen wird. Diese bekannte Ausführungsform bedingt einen verhältnismäßig langen und äußerst stabil aufgebauten Ausleger, der zudem durch die scheibenwischerartige Bewegung des Rechens besonders hohen Belastungen ausgesetzt ist, ohne daß dadurch eine in allen Bereichen der Mischbett-Anschnittfläche gleich gute Räumarbeit gewährleistet ist.

Ferner ist es bekannt (DE-OS 20 00 103) den am Brücken-Ausleger getragenen, mit der Mischbett-Anschnittfläche in Eingriff kommenden Rechen in seiner Größe und Form der Größe und Form der Anschnittfläche des Mischbettes anzupassen. Dies bedingt nicht nur eine äußerst stabile Tragkonstruktion seitens des Auslegers, sondern auch eine besonders schwere und aufwendige Konstruktion des Rechens selbst.

Bei den bekannten Ausführungsformen treten vielfach auch noch Schwierigkeiten dadurch auf, daß vor allem der Rechen aufgrund seiner Form und Arbeitsbewegungen die Mischbett-Anschnittfläche verhältnismäßig weit überfährt, so daß bei überdachten Halden bzw. Mischbetten oberhalb des Mischbettes ein unerwünscht großer, ungenutzter Raum für die Räumvorrichtung erforderlich ist.

Der Erfindung liegt daher die Aufgabe zugrunde, eine Vorrichtung der eingangs genannten Art zu schaffen, die sich insbesondere durch ihre verhältnismäßig einfache und leichte Konstruktion sowie durch ihre zuverlässige Räumarbeit über der ganzen Anschnittfläche des Mischbettes auszeichnet.

Dieses Aufgabe wird erfindungsgemäß dadurch gelöst, daß an dem Ausleger im Bereich der Mitte
der Anschnittfläche eine durch einen Antrieb drehbare Drehschiene gelagert ist, von der der bis in
die Ecken der Anschnittfläche reichende Rechen in
Längsrichtung verschiebbar getragen wird.

Bei dieser erfindungsgemäßen Ausführungsform wird
also der Rechen nicht direkt vom Ausleger sondern
von einer Drehschiene getragen. Da diese Drehschiene
im Bereich der Mitte (geometrische Mitte) der Anschnittfläche drehbar gelagert ist (d.h. die Drehachse dieser Drehschiene liegt in dem genannten
Mittenbereich etwa senkrecht zur Mischbett-Anschnittfläche), genügt - verglichen mit den erwähnten bekannten Ausführungen - nur ein verhältnismäßig
kurzer Ausleger, wobei der Rechen während der erwähnten Drehbewegung der Drehschiene ohne weiteres
in Anpassung an die gegebene Außenkontur der Mischbett-Anschnittfläche in Längsrichtung verschoben
wird, so daß auch jede Ecke dieser Anschnittfläche
zuverlässig vom Rechen bestrichen und somit abgebaut bzw.geräumt werden kann. Hierzu bedarf es nur
einer verhältnismäßig leichten Konstruktion von
Drehschiene und Rechen, was sich auch auf eine
günstige Ausbildung des Auslegers auswirkt; die
zuverlässige Arbeitsweise wird durch die verhältnismäßig leichte Konstruktion jedoch in keiner Weise
beeinträchtigt, so daß die an eine solche Räumvorrichtung gestellten Forderungen in optimaler Weise (sowohl funktionell als auch konstruktiv) erfüllt werden können.

Weitere Einzelheiten und Vorteile der Erfindung ergeben sich aus den Unteransprüchen sowie aus der folgenden Beschreibung eines in der Zeichnung veranschaulichten, bevorzugten Ausführungsbeispieles. In der ganz schematisch gehaltenen Zeichnung zeigen

Fig. 1    eine Seitenansicht der Vorrichtung bei ihrer Räumarbeit an einer Anschnittfläche eines Mischbettes;

Fig. 2    eine Ansicht (schräg von oben) gemäß Pfeil II in Fig. 1;

Fig. 3    eine Querschnittsansicht entlang der Linie III-III in Fig. 2 durch die Drehschiene und den Rechen.

Die in der Zeichnung veranschaulichte Vorrichtung dient zum Räumen eines üblichen, haldenförmigen Mischbettes 1 aus Schüttgut. Die Vorrichtung enthält eine übliche und daher nur vereinfacht dargestellte Brücke 2, die sich quer über die Mischbettbreite erstreckt und in Längsrichtung des Mischbettes 1 verfahren werden kann. An der Brücke 2 ist ein in herkömmlicher Weise angelenkter Ausleger 3 vorgesehen, der außerdem über Seile 4 in der Weise abgespannt ist, daß er mit Hilfe eines Windenantriebes 5 in Richtung des Doppelpfeiles 6 zu einem noch zu erläuternden Zweck auf- und abgeschwenkt werden kann.

Der Ausleger 3 trägt an seinem äußeren freien Ende einen zum Kratzeingriff mit der Anschnittfläche 7 des Mischbettes 1 bestimmten Rechen 8. Diesen Rechen 8 trägt der Ausleger jedoch mit Hilfe einer Drehschiene 9, die im Bereich der Mitte der Anschnittfläche 7 durch einen Antrieb 10 drehbar am Ausleger 3 gelagert ist. Bei dieser Drehschiene 9 handelt es sich um eine ebene gerade Schiene, die parallel zur Anschnittfläche 7 des Mischbettes 1 verläuft und sich dabei um eine Drehachse 11 dreht, die senkrecht zu dieser Drehschiene 9 bzw. senkrecht zur Anschnittfläche 7 liegt.

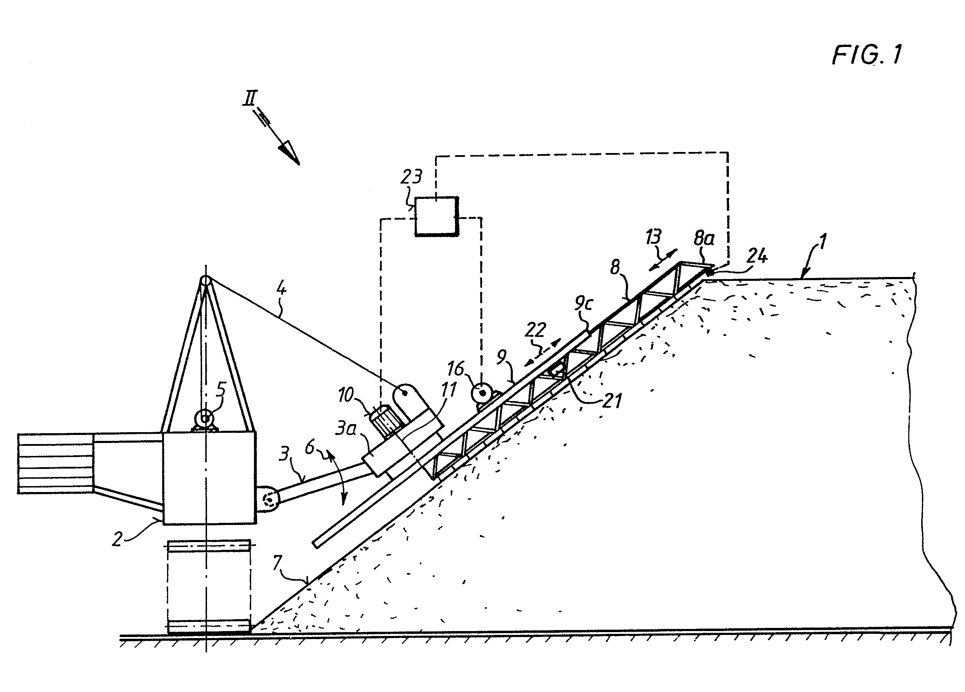

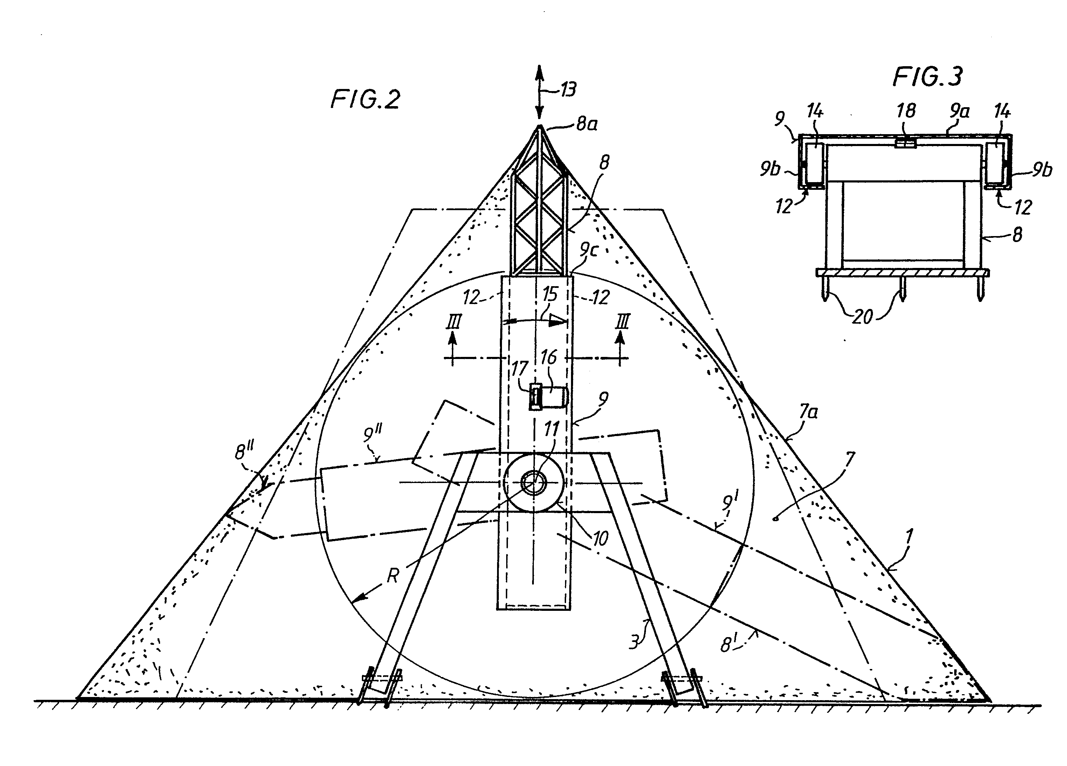

Die Drehschiene 9 besitzt im Bereich ihrer beiden Längsränder Führungsschienen 12 (vgl. Fig. 2 und 3), die den Rechen 8 in der Weise führen und haltern, daß er in der Drehschiene 9 in Längsrichtung (Doppelpfeil 13) verschiebbar getragen wird. Zu diesem Zweck kann die Drehschiene 9 eine im wesentlichen geschlossene, ebene Oberseite 9a mit nach unten mehrfach abgewinkelten Seitenrandbereichen 9b aufweisen, die die Führungsschienen 12 für den Rechen 8 bilden. Der Rechen 8 ist - wie sich aus den Fig. 1 und 2 ersehen läßt - verhältnismäßig schmal und langgestreckt in Form eines Rahmengerüstes aufgebaut. Zur Führung des Rechens 8 in den Führungsschienen 12 der Drehschiene 9 können alle geeigneten Gleitführungen verwendet werden. Es besteht aber auch die Möglichkeit - wie in Fig. 3 angedeutet -, den Rechen 8 mit Hilfe mehrerer seitlicher Führungsrollen 14 in den Führungsschienen 12 der Drehschiene 9 entlang zu führen.

Wie bereits erwähnt worden ist, kann der Ausleger 3 in Richtung des Doppelpfeiles 6 gegenüber der Brücke 2 bzw. der Mischbett-Anschnittfläche 7 geschwenkt werden. Diese Schwenkmöglichkeit des Auslegers 3 dient dazu, die Drehschiene 9 und damit den Rechen 8 parallel zur Mischbett-Anschnittfläche 7 auszurichten, um so bei jeder Umdrehung der Drehschiene 9 in Richtung des Pfeiles 15 eine überall gleich große Schicht vom Mischbett (an dessen Anschnittfläche 7) abzutragen. Bei dieser Drehbewegung der Drehschiene 9 ist ferner dafür Sorge getragen, daß der Rechen 8 in der Weise längs verschoben wird (in Richtung des Doppelpfeiles 13), daß das wirksame freie Rechenende 8a bis zu jeder Ecke der Anschnittfläche 7 reicht, die entsprechend den durchgehenden Linien als Dreieckfläche oder - entsprechend den strichpunktierten Linien - als Trapezfläche gebildet sein kann; selbstverständlich können auch andere in der Praxis vorkommende Anschnittflächenformen (z.B. schiefe Dreiecke, unsymmetrische Trapezformen usw.) in gleicher Weise vollkommen vom Rechen 8 bestrichen werden.

Für die Verschiebbarkeit des Rechens 8 trägt die Drehschiene 9 einen Verschiebeantrieb 16, der mit dem Rechen 8 zusammenwirkt. Bei diesem Verschiebeantrieb 16 kann es sich um jede Antriebsart handeln, die eine lineare Längsverschiebbarkeit des Rechens 8 in der Drehschiene 9 gewährleistet. Dies kann beispielsweise ein entsprechender Seilantrieb oder - wie in den Fig. 2 und 3 angedeutet - ein Zahnstangenantrieb sein, dessen Zahnritzel 17 am Antrieb 16 angeordnet ist, während die zugehörige Zahnstange 18 längs des Rechens 8 in entsprechender Weise befestigt ist.

Der Drehantrieb 10 für die Drehschiene 9 ist an einem Auslegerkopf 3a angeordnet, der gegen den Mittenbereich der Anschnittfläche 7 weist und dabei die Drehschiene 9 unverschiebbar trägt.

Für eine gleichmäßige Räum- und Mischarbeit der Vorrichtung ist es vorteilhaft, wenn die Drehgeschwindigkeit der Drehschiene 9 und die Linearverschiebegeschwindigkeit des Rechens 8 verändert werden können. Diese Geschwindigkeiten sollten dabei vorzugsweise so eingestellt werden können, daß die mit der Anschnittfläche 7 des Mischbettes 1 in Eingriff kommenden Reißwerkzeuge (z.B. Zinken 20) des Rechens 8 eine konstante Arbeitsgeschwindigkeit erhalten. Für besonders stark haftende Schüttgüter kann darüber hinaus der Rechen 8 noch einen zusätzlichen Antrieb 21 erhalten, durch den die lineare Verschiebebewegung des Rechens 8 in Richtung des Doppelpfeiles 13 noch von einer kurzhubigen, linearen Hin- und Herbewegung überlagert werden kann, wie es durch den gestrichelten Doppelpfeil 22 angedeutet ist.

Für eine selbsttätige, zuverlässige Räumarbeit ist es ferner zweckmäßig, der Vorrichtung eine Steuereinrichtung (bei 23 angedeutet) für die lineare Verschiebbarkeit des Rechens 8 in der Weise zuzuordnen, daß die maximale Ausfahrbarkeit des wirksamen freien Rechenendes 8a in jeder Drehstellung der Drehschiene 9 etwa am Außenrand 7a der jeweiligen Mischbett-Anschnittfläche 7 entlang geführt wird, so daß der Rechen 8 bei jeder Drehschienen-Umdrehung die gesamte Anschnittfläche 7 bestreicht, ohne jedoch über die Außenkontur dieser Anschnittfläche 7 hinauszufahren. Zu diesem Zweck kann die Steuereinrichtung 23 mit Sensoren 24 ausgestattet sein, die am wirksamen freien Rechenende 8a angebracht sind und den Außenrand 7a bzw. die Außenkontur der jeweiligen Mischbett-Anschnittfläche 7 abtasten. Die von den Sensoren 24 erzeugten Signale können dann an die Steuereinrichtung 23 selbst abgegeben werden, die steurungsmäßig mit dem Verschiebeantrieb 16 für den Rechen 8 sowie außerdem noch mit dem Drehantrieb 10 für die Drehschiene 9 in Verbindung steht, wie durch gestrichelte Linien angedeutet ist. Zusätzlich oder alternativ zu den Sensoren besteht auch die Möglichkeit, die Steuereinrichtung für die lineare Verschiebbarkeit des Rechens 8 programmierbar entsprechend der jeweiligen Form bzw. Außenkontur der Mischbett-Anschnittfläche auszuführen.

Hinsichtlich der Ausführung der Drehschiene 9 sei noch erwähnt, daß diese selbstverständlich so lang ausgebildet ist, daß eine zuverlässige Führung und Halterung des Rechens 8 in jeder Verschiebestellung gewährleistet ist. Im veranschaulichten Ausführungsbeispiel (vgl. insbesondere Fig. 2) ist die Drehschiene 9 in bezug auf ihre Drehachse 11 so angeordnet, daß sie in Auszugrichtung des Rechens 8 einen längeren Längsabschnitt als in der entgegengesetzten Richtung aufweist. Hierbei besitzt der von dem äußersten freien Ende 9c der Drehschiene 9 bestrichene und auf die Anschnittfläche 7 projezierte Kreis einen Radius R, der dem kleinsten Abstand vom Außenrand der Mischbett-Anschnittfläche 7 zur geometrischen Drehachse 11 der Drehschine 9 entspricht. In Fig. 2 sind ferner mit strichpunktierten Linien noch zwei Zwischenstellungen der Drehschiene 9 bei 9' bzw. 9'' während der Drehbewegung in Richtung des Pfeiles 15 angedeutet, wobei in jeder Drehstellung der Rechen 8' bzw. 8'' verschieden weit ausgefahren ist, und zwar jeweils entsprechend dem Außenrand der Mischbett-Anschnittfläche 7.

Patentansprüche:

1. Vorrichtung zum Räumen eines Mischbettes, mit einem an einer verfahrbaren Brücke angebrachten Ausleger, der einen zum Kratzeingriff mit der Anschnittfläche des Mischbettes bestimmten Rechen trägt, dadurch gekennzeichnet, daß an dem Ausleger (3) im Bereich der Mitte der Anschnittfläche (7) eine durch einen Antrieb (10) drehbare Drehschiene (9) gelagert ist, von der der bis zu den Ecken der Anschnittfläche reichende Rechen (8) in Längsrichtung verschiebbar getragen wird.

2. Vorrichtung nach Anspruch 1, dadurch gekennzeichnet, daß die Drehschiene (9) im Bereich ihrer beiden Längsränder (9b) Führungsschienen (12) für die Längsverschiebbarkeit des Rechens (8) aufweist.

3. Vorrichtung nach Anspruch 2, dadurch gekennzeichnet, daß die Drehschiene (9) eine im wesentlichen geschlossene, ebene Oberseite (9a) mit nach unten mehrfach abgewinkelten Längsrandbereichen (9b) aufweist, die die Führungsschienen (12) für den Rechen (8) bilden.

4. Vorrichtung nach den Ansprüchen 1 bis 3, dadurch gekennzeichnet, daß die Drehschiene (9) von dem gegen den Mittenbereich der Anschnittfläche (7) weisenden Kopf (3a) des Auslegers (3) unverschiebbar getragen wird.

5. Vorrichtung nach Anspruch 4, dadurch gekennzeichnet, daß der Ausleger (3) schwenkbeweglich derart an der verfahrbaren Brücke (2) angebracht ist, daß die Drehschiene (9) etwa parallel zur Anschnittfläche (7) des Mischbettes (1) einstellbar ist.

6. Vorrichtung nach Anspruch 4, dadurch gekennzeichnet, daß der Drehantrieb (10) für die Drehschiene (9) am Auslegerkopf (3a) angeordnet ist und die Drehachse (11) senkrecht zur Drehschiene (9) verläuft.

7. Vorrichtung nach wenigstens einem der vorhergehenden Ansprüche, dadurch gekennzeichnet, daß die Drehschiene (9) einen Verschiebeantrieb (16) für den Rechen ( 8) trägt.

8. Vorrichtung nach den Ansprüchen 1, 6 und 7, dadurch gekennzeichnet, daß die Drehgeschwindigkeit der Drehschiene (9) und die Lineargeschwindigkeit des Rechens (8) veränderbar sind.

9. Vorrichtung nach Anspruch 8, dadurch gekennzeichnet, daß die Drehgeschwindigkeit der Drehschiene (9) und die Lineargeschwindigkeit des Rechens (8) in der Weise einstellbar sind, daß die mit der Anschnittfläche (7) des Mischbettes (1) in Eingriff kommende Reißwerkzeuge (20) des Rechens (8) eine konstante Arbeitsgeschwindigkeit aufweisen.

10. Vorrichtung nach Anspruch 8 und/oder 9, dadurch gekennzeichnet, daß die lineare Verschiebebewegung des Rechens (8) von einer kurzhubigen, linearen Hin- und Herbewegung überlagerbar ist.

11. Vorrichtung nach wenigstens einem vorhergehenden Ansprüche, dadurch gekennzeichnet, daß eine Steuereinrichtung (23) für die lineare Verschiebbarkeit des Rechens (8) in der Weise vorgesehen ist, daß die maximale Ausfahrbarkeit des wirksamen freien Rechenendes (8a) in jeder Drehstellung der Drehschiene (9) etwa dem Außenrand (7a) der jeweiligen Mischbett-Anschnittfläche angepaßt ist.

12. Vorrichtung nach Anspruch 11, dadurch gekennzeichnet, daß die Steuereinrichtung (23) am wirksamen freien Rechenende (8a) angebrachte Sensoren (24) aufweist.

13. Vorrichtung nach Anspruch 11, dadurch gekennzeichnet, daß die Steuereinrichtung entsprechend der jeweiligen Form der Mischbett-Anschnittfläche programmierbar ist.

14. Vorrichtung nach wenigstens einem der vorhergehenden Ansprüche, dadurch gekennzeichnet, daß der von dem äußersten freien Ende (9c) der Drehschiene (9) bestrichene Kreis einen Radius (R) besitzt, der dem kleinsten Abstand vom Außenrand der Mischbett-Anschnittfläche (7) zur geometrischen Drehachse (11) der Drehschiene (9) entspricht.

FIG.1

FIG.2

FIG.3

2/2

0069841